# EUROPÄISCHE PATENTSCHRIFT

(11) **EP 1 598 027 B1**
(45) Veröffentlichungstag und Bekanntmachung des Hinweises auf die Patenterteilung: **17.12.2008**
(21) Anmeldenummer: 05004559.0
(22) Anmeldetag: 02.03.2005
(51) Int. Cl.: A61C 5/02

(54) **Wurzelkanalinstrumentenset**
Set of endodontic instruments
Jeu d' instruments endodontiques

(30) Priorität: 17.05.2004 DE 202004007925 U
(43) Veröffentlichungstag der Anmeldung: 23.11.2005
(73) Patentinhaber: Gebr. Brasseler GmbH & Co. KG, D-32657 Lemgo (DE)
(72) Erfinder: Hagemann, Frank, 32657 Lemgo (DE)
(74) Vertreter: Weber, Joachim

(56) Entgegenhaltungen:
- EP-A- 1 354 566
- WO-A-20/04091422
- DE-C1- 10 135 820
- US-A- 5 752 825
- US-A- 6 012 921
- US-A1- 2003 013 067

## Beschreibung

Die Erfindung bezieht sich auf ein Wurzelkanalinstrumentenset mit zumindest zwei Wurzelkanalinstrumenten nach dem Oberbegriff des Hauptanspruchs.

Aus dem Stand der Technik sind unterschiedlichste Ausgestaltungen von Wurzelkanalinstrumenten bekannt, die in Sets bereitgestellt werden. Somit kann der Zahnarzt einen Wurzelkanal dadurch bearbeiten, dass er in der Abfolge die einzelnen Wurzelkanalinstrumente zum Einsatz bringt. Der Wurzelkanal wird somit schrittweise bearbeitet.

Der Stand der Technik zeigt grundsätzlich zwei unterschiedliche Arten von Wurzelkanalinstrumentensets. Bei dem einen ist das erste Werkzeug relativ dünn, während das nachfolgende Werkzeug jeweils einen größeren Durchmesser aufweist. Der Wurzelkanal wird somit schrittweise in seinem Durchmesser erweitert. Die andere Vorgehensweise, die auch als "Crown-down-Präparation" bezeichnet wird, beginnt mit einem Instrument größeren Durchmessers, durch welches der obere, äußere Bereich des Wurzelkanals bearbeitet wird. Das nachfolgende Instrument weist einen geringeren Durchmesser auf und gestattet eine weitergehende, tiefergehende Bearbeitung des Wurzelkanals.

Die vorliegende Erfindung bezieht sich auf Wurzelkanalinstrumentenset für die Crown-down-Präperation.

Wurzelkanalinstrumentensets der genannten Art beschreiben die DE 101 35 820 C1 oder die DE 101 35 821 C1.

Das erfindungsgemäße Wurzelkanalinstrumentenset dient ebenso wie die aus dem oben genannten Stand der Technik bekannten Wurzelkanalinstrumentensets für die maschinelle Wurzelkanalaufbereitung. Dabei ist es insbesondere wichtig, die einzelnen Wurzelkanalinstrumente hinsichtlich ihrer Belastbarkeit und ihrer Bruchsicherheit zu optimieren. Dabei spielt auch die Schneidengeometrie eine erhebliche Rolle. Weiterhin muss dafür Sorge getragen werden, dass ein ausreichender Spanraum vorhanden ist, um das Material abzutragen.

Die US 6 012 921 A sowie die US 2003/013067 A1 zeigen jeweils Wurzelkanalinstrumentensets, die nicht nach dem Crown-Down-Prinzip arbeiten. Dabei sind unterschiedliche Querschnittsformen dargestellt, welche beliebig verwendet werden können. Dies zeichnet sich dadurch aus, dass jeweils sämtliche der schneidenden Kanten hinsichtlich ihrer Geometrie gleich sind. Gleiches gilt auch für die Querschnittsgeometrien gemäß US 5,752,825.

Die vorangemeldete, nachveröffentlichte WO 2004/091422 A zeigt in ähnlicher Weise Querschnittsformen, bei welchen sämtliche der schneidenden Kanten jeweils gleich dimensioniert sind.

Der Erfindung liegt die Aufgabe zugrunde, ein Wurzelkanalinstrumentenset der eingangs genannten Art zu schaffen, welchesein hohes Maß an Bruchsicherheit bei optimaler Spanabfuhr und optimalen Arbeitsbedingungen gewährleistet.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit vorgesehen, dass ein erstes Wurzelkanalinstrument an seinem Arbeitsteil mit vier Schneiden und ein nachfolgend zu diesem zu verwendendes Wurzelkanalinstrument an seinem Arbeitsteil mit fünf Schneiden versehen sind.

Das erfindungsgemäße Wurzelkanalinstrumentenset zeichnet sich durch eine Reihe erheblicher Vorteile aus. Durch die unterschiedlichen Anzahlen von Schneiden ergeben sich von Wurzelkanalinstrument zu Wurzelkanalinstrument unterschiedliche Schneidengeometrien. Das erstgenannte Wurzelkanalinstrument mit vier Schneiden verfügt somit über einen großen Querschnitt, der die Bruchsicherheit und Festigkeit gewährleistet, während bei der Verwendung von vier Schneiden zusätzlich ein ausreichend großer Spanraum vorliegt.

Bei dem nachfolgenden Instrument, welches, bedingt durch die Crown-down-Präparationstechnik, einen geringeren Durchmesser aufweist, sind erfindungsgemäß fünf Schneiden vorgesehen, die ein Höchstmaß an Querschnittsfläche bieten. Hierdurch ergibt sich sowohl eine hohe Belastbarkeit als auch eine hohe Bruchsicherheit. Dabei ist noch ein ausreichend großer Spanraum vorhanden, um das bei dem nachfolgenden Bearbeitungsvorgang anfallende Material abzuführen.

Die Querschnittsform kann erfindungsgemäß so ausgebildet sein, dass sie bei vier Schneiden eine symmetrische Querschnittsform ergibt. Diese kann beispielsweise rhombusartig ausgebildet sein. Dabei weist der Querschnitt zwei gleiche, einander gegenüberliegende Kantenwinkel auf.

Der mit fünf Schneiden versehene Querschnitt des Wurzelkanalinstruments hat einen nicht-regelmäßigen, symmetrischen Aufbau, bei welchem beispielsweise jeweils zwei einander gegenüberliegende, gleiche Kantenwinkel vorgesehen sind.

Durch die erfindungsgemäße Ausgestaltung der Wurzelkanalinstrumente des Wurzelkanalinstrumentensets ergibt sich im Vergleich zum Stand der Technik eine Erhöhung der Bruchsicherheit und der mechanischen Belastbarkeit. Gleichzeitig erfolgt eine optimale Spanabfuhr. Durch die gewählten Kantenwinkel, welche zugleich die Schnittgeometrie definieren, ergibt sich eine hohe Schnittfreudigkeit bei den Wurzelkanalinstrumenten.

Erfindungsgemäß ist es möglich, die Wurzelkanalinstrumente mit unterschiedlichem Drall zu versehen, beispielsweise mit einem konstanten, einem dynamischen oder einem variabel ausgeführten Drall.

Erfindungsgemäß können die Arbeitsteile der Wurzelkanalinstrumente entweder mit einer balligen Außenkontur oder mit einer konischen Außenkontur versehen sein.

Das erfindungsgemäße Wurzelkanalinstrumentenset kann, in Abhängigkeit von den jeweiligen Einsatzbedingungen, zwei, drei, vier oder auch mehr Wurzelkanalinstrumente umfassen. Bei der Verwendung von drei oder vier Wurzelkanalinstrumenten in dem erfindungsgemäßen Wurzelkanalinstrumentenset ist es möglich, dass die ersten beiden zu verwendenden Wurzelkanalinstrumente vier Schneiden aufweisen, während das dritte Wurzelkanalinstrument bzw. das vierte Wurzelkanalinstrument mit fünf Schneiden versehen ist.

Ein erfindungsgemäßes Wurzelkanalinstrument set mit vier Wurzelkanalinstrumenten könnte beispielsweise wie folgt zusammengestellt sein:

### Wurzelkanalinstrument 1:

Arbeitslänge (Hals und Arbeitsteil): 19 mm
Ballige Arbeitsteile mit einem annähernden Taper von 08 bis 12
Arbeitsteillänge: 8 bis 12 mm

### Wurzelkanalinstrument 2:

Arbeitslänge (Hals und Arbeitsteil): 22 mm
Ballige Arbeitsteile mit einem annähernden Taper von 06 bis 08
Arbeitsteillänge: 8 bis 12 mm

### Wurzelkanalinstrument 3:

Arbeitslänge (Hals und Arbeitsteil): 25 mm
Ballige Arbeitsteile mit einem annähernden Taper von 04 bis 06
Arbeitsteillänge: 8 bis 12 mm

### Wurzelkanalinstrument 4:

Arbeitslänge (Hals und Arbeitsteil): 25 mm
Ballige Arbeitsteile mit einem annähernden Taper von 02 bis 04
Arbeitsteillänge: 8 bis 12 mm

Der bei der Ausgestaltung der Schneiden mögliche Taper gibt die Konizität wieder. Dabei besagt ein Zahlenwert von beispielsweise von 04, dass sich die Konizität des Arbeitsteils auf eine Länge von 1 mm des Arbeitsteils im Durchmesser um 0,04 mm ändert.

Im Folgenden wird die Erfindung anhand von Ausführungsbeispielen in Verbindung mit der Zeichnung beschrieben. Dabei zeigt:
- Fig. 1: eine schematische Darstellung eines erfindungsgemäßen Wurzelkanalinstrumentensets mit drei Wurzelkanalinstrumenten,
- Fig. 2: eine Schnittansicht durch ein Arbeitsteil eines Wurzelkanalinstruments mit vier Schneiden,
- Fig. 3: eine Schnittansicht eines Wurzelkanalinstruments mit fünf Schneiden, und
- Fig. 4: eine alternative Ausgestaltungsform eines Querschnitts mit fünf Schneiden.

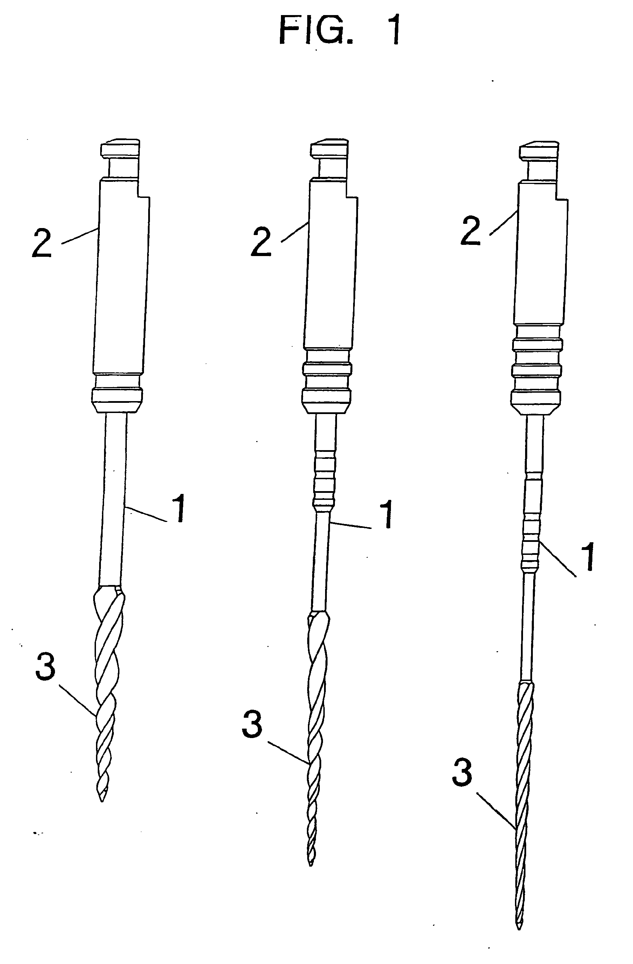

Die Fig. 1 zeigt in schematischer Darstellung ein Wurzelkanalinstrumentenset mit drei nacheinander zu verwendenden Wurzelkanalinstrumenten. Die Anzahl der Nuten im Schaft gibt die Reihenfolge vor. Dabei umfasst das Wurzelkanalinstrument einen Hals 1, an dessen freiem Ende ein Arbeitsteil 3 vorgesehen ist. Dieser ist bei dem gezeigten Ausführungsbeispiel ballig hinsichtlich seiner Hüllkurve ausgestaltet. Am anderen Ende des Halses ist ein Schaftende 2 ausgebildet, welches so gestaltet ist, dass das Wurzelkanalinstrument in einen Antriebsmechanismus einsteckbar ist, um eine maschinelle Wurzelkanalaufbereitung vornehmen zu können.

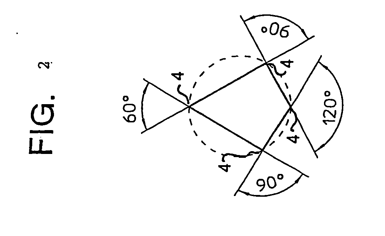

Die Fig. 2 bis 4 zeigen jeweils Schnittansichten durch den Arbeitsteil 3. Durch den Kreis ist jeweils die Umfangs-Hüllkurve wiedergegeben, auf welcher die jeweiligen Schneiden 4 angeordnet sind, die durch die Kanten des Querschnittsprofils gebildet werden.

Die Fig. 2 zeigt eine Querschnittsform in Form eines Deltoids . Dabei sind zwei einander gegenüberliegende Kantenwinkel von 90° vorgesehen, während die beiden anderen Kantenwinkel 60° bzw. 120° betragen. Aus der Darstellung der Fig. 2 ergibt sich, dass insbesondere unterschiedliche Schnittgeometrien durch die unterschiedlichen Kantenwinkel definiert sind. Der Kantenwinkel entspricht dem Keilwinkel gemäß den Definitionen der Schneidengeometrie eines spanabhebenden Werkzeugs.

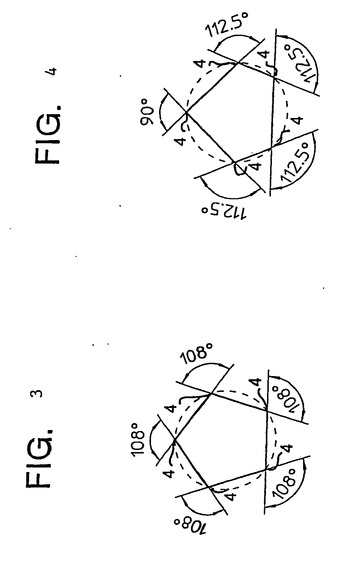

In Fig. 3 ist eine Querschnittsform mit fünf Schneiden vorgesehen, welche in Form eines regelmäßigen Fünfecks (Pentagon) ausgestaltet ist, wobei sich jeweils Kantenwinkel von 108° ergeben.

Bei dem in Fig. 4 gezeigten Ausführungsbeispiel ergibt sich die Form eines unregelmäßigen Fünfecks, wobei jeweils vier der Kantenwinkel gleich sind.

Die Querschnittsformen der Fig. 2 und 4 sind somit jeweils symmetrisch bezüglich einer Symmetrielinie, die senkrecht zur Drehachse (nicht dargestellt) des Wurzelkanalinstruments angeordnet ist.

## Patentansprüche

1. Wurzelkanalinstrumentenset mit zumindest zwei Wurzelkanalinstrumenten, wobei jedes Wurzelkanalinstrument einen Hals (1) mit einem Schaftende (2) an einem Ende und mit einem mit zumindest einer Schneidkante versehenen Arbeitsteil (3) am anderen Ende aufweist, wobei ein Wurzelkanalinstrument mit einem größeren Durchmesser versehen ist, als ein nachfolgend zu verwendendes Wurzelkanalinstrument, **dadurch gekennzeichnet, dass** ein erstes Wurzelkanalinstrument an seinem Arbeitsteil (3) mit vier Schneiden (4) und ein nachfolgend zu diesem zu verwendendes Wurzelkanalinstrument an seinem Arbeitsteil (3) mit fünf Schneiden (4) versehen sind, dass das mit vier Schneiden (4) versehene Wurzelkanalinstrument einen Querschnitt in Form eines unregelmäßigen Rhombus mit zwei einander gegenüberliegenden Kantenwinkeln von 90°,und den beiden anderen Kantenwinkeln von 60° bzw. 120° aufweist, und dass das mit fünf Schneiden (4) versehene Wurzelkanalinstrument einen symmetrischen, ein Fünfeck bildenden Querschnitt aufweist.

2. Wurzelkanalinstrumentenset nach Anspruch 1, **dadurch gekennzeichnet, dass** das mit fünf Schneiden (4) versehene Wurzelkanalinstrument in Form eines regelmäßigen Fünfecks ausgestaltet ist, wobei sich jeweils Kantenwinkel von 108° ergeben.

3. Wurzelkanalinstrumentenset nach Anspruch 1, **dadurch gekennzeichnet, dass** das mit fünf Schneiden (4) versehene Wurzelkanalinstrument in Form eines unregelmäßigen Fünfecks ausgebildet ist, wobei jeweils vier der Kantenwinkel gleich sind.

4. Wurzelkanalinstrumentenset nach einem der Ansprüche 1 bis 3, **dadurch gekennzeichnet, dass** der Querschnitt des Wurzelkanalinstruments mit vier Schneiden zwei gleiche, einander gegenüberliegende Kantenwinkel aufweist.

5. Wurzelkanalinstrumentenset nach einem der Ansprüche 1 bis 4, **dadurch gekennzeichnet, dass** das Wurzelkanalinstrumentenset zwei Wurzelkanalinstrumente umfasst.

6. Wurzelkanalinstrumentenset nach einem der Ansprüche 1 bis 4, **dadurch gekennzeichnet, dass** das Wurzelkanalinstrumentenset drei Wurzelkanalinstrumente umfasst.

7. Wurzelkanalinstrumentenset nach einem der Ansprüche 1 bis 4, **dadurch gekennzeichnet, dass** das Wurzelkanalinstrumentenset vier Wurzelkanalinstrumente umfasst.

8. Wurzelkanalinstrumentenset nach einem der Ansprüche 1 bis 7, **dadurch gekennzeichnet, dass** die Wurzelkanalinstrumente nach dem Crown-down-Prinzip dimensioniert sind.

9. Wurzelkanalinstrumentenset nach einem der Ansprüche 1 bis 8, **dadurch gekennzeichnet, dass** die Wurzelkanalinstrumente an ihrem Arbeitsteil (3) mit einer balligen Außenkontur versehen sind.

## Claims

1. A root canal instrument set comprising at least two root canal instruments, each root canal instrument having a neck (1) including a shaft end (2) at one end thereof and a working part (3) provided with at least one cutting edge at the other end thereof, one root canal instrument having a larger diameter than a root canal instrument to be used subsequently, **characterized in that** a first root canal instrument is provided with four cutting edges (4) at its working part (3) and a root canal instrument to be used subsequently thereto is provided with five cutting edges (4) at its working part, that the root canal instrument provided with four cutting edges (4) has a cross-section in the shape of an irregular rhombus with two opposite edge angles of 90° and the two other edge angles of 60° and 120°, respectively, and that the root canal instrument provided with five cutting edges (4) has a symmetric cross-section forming a pentagon.

2. The root canal instrument set of claim 1, **characterized in that** the root canal instrument being provided with five cutting edges (4) is formed in the shape of a regular pentagon, wherein respectively edge angles of 108° occur.

3. The root canal instrument set of claim 1, **characterized in that** the root canal instrument being provided with five cutting edges (4) is formed in the shape of an irregular pentagon, wherein respectively four of the edge angles are identical.

4. The root canal instrument set of one of claims 1 to 3, **characterized in that** the cross-section of the root canal instrument provided with four cutting edges has two identical, opposite edge angles.

5. The root canal instrument of one of claims 1 to 4, **characterized in that** the root canal instrument set comprises two root canal instruments.

6. The root canal instrument of one of claims 1 to 4, **characterized in that** the root canal instrument set comprises three root canal instruments.

7. The root canal instrument of one of claims 1 to 4, **characterized in that** the root canal instrument set comprises four root canal instruments.

8. The root canal instrument set of one of claims 1 to 7, **characterized in that** the root canal instruments are dimensioned according to the crown-down-principle.

9. The root canal instrument set of one of claims 1 to 8, **characterized in that** the root canal instruments are provided with a crowned outer contour at their working part (3).

## Revendications

1. Jeu d'instruments pour canaux radiculaires, comprenant au moins deux instruments pour canaux radiculaires, dans lequel chaque instrument pour canaux radiculaires présente un col (1) avec une extrémité de manche (2) à une extrémité et avec à l'autre extrémité une partie opérationnelle (3) munie d'au moins une arête de coupe, dans lequel un instrument pour canaux radiculaires est muni d'un diamètre supérieur à celui d'un instrument pour canaux radiculaires à utiliser par la suite, **caractérisé en ce qu'**un premier instrument pour canaux radiculaires est muni au niveau de sa partie opérationnelle (3) de quatre lames (4) et un instrument pour canaux radiculaires à utiliser après celui-ci est muni au niveau de sa partie opérationnelle (3) de cinq lames (4), **en ce que** l'instrument pour canaux radiculaires muni de quatre lames (4) présente une section transversale sous la forme d'un losange irrégulier avec deux angles de bord opposés l'un à l'autre de 90° et les deux autres angles de bord étant de 60° ou 120°, et **en ce que** l'instrument pour canaux radiculaires muni de cinq lames (4) présente une section transversale symétrique formant un pentagone.

2. Jeu d'instruments pour canaux radiculaires selon la revendication 1, **caractérisé en ce que** l'instrument pour canaux radiculaires muni de cinq lames (4) est configuré sous la forme d'un pentagone régulier, les angles de bord s'établissant respectivement à108°.

3. Jeu d'instruments pour canaux radiculaires selon la revendication 1, **caractérisé en ce que** l'instrument pour canaux radiculaires muni de cinq lames (4) est réalisé sous la forme d'un pentagone irrégulier, dans lequel respectivement quatre angles de bord sont identiques.

4. Jeu d'instruments pour canaux radiculaires selon l'une quelconque des revendications 1 à 3, **caractérisé en ce que** la section transversale de l'instrument pour canaux radiculaires à quatre lames présente deux angles de bord identiques, opposés l'un à l'autre.

5. Jeu d'instruments pour canaux radiculaires selon l'une quelconque des revendications 1 à 4, **caractérisé en ce que** le jeu d'instruments pour canaux radiculaires comprend deux instruments pour canaux radiculaires.

6. Jeu d'instruments pour canaux radiculaires selon l'une quelconque des revendications 1 à 4, **caractérisé en ce que** le jeu d'instruments pour canaux radiculaires comprend trois instruments pour canaux radiculaires.

7. Jeu d'instruments pour canaux radiculaires selon l'une quelconque des revendications 1 à 4, **caractérisé en ce que** le jeu d'instruments pour canaux radiculaires comprend quatre instruments pour canaux radiculaires.

8. Jeu d'instruments pour canaux radiculaires selon l'une quelconque des revendications 1 à 7, **caractérisé en ce que** les instruments pour canaux radiculaires sont dimensionnés selon le principe "crown-down".

9. Jeu d'instruments pour canaux radiculaires selon l'une quelconque des revendications 1 à 8, **caractérisé en ce que** les instruments pour canaux radiculaires sont munis au niveau de leur partie opérationnelle (3) d'un contour extérieur bombé.
